# EUROPÄISCHE PATENTSCHRIFT

(11) **EP 3 847 057 B1**
(45) Veröffentlichungstag und Bekanntmachung des Hinweises auf die Patenterteilung: **11.01.2023**
(21) Anmeldenummer: 19759365.0
(22) Anmeldetag: 27.08.2019
(51) Int. Cl.: B60Q 3/20, B60Q 3/54, B60Q 3/64, B60Q 3/74, B60R 7/04, B60Q 3/225

(54) **ABDECKVORRICHTUNG ZUM ABDECKEN EINES BEREICHS IM INNENRAUM EINES KRAFTFAHRZEUGS**
COVERING DEVICE FOR COVERING A REGION IN THE INTERIOR OF A MOTOR VEHICLE
DISPOSITIFS DE RECOUVREMENT POUR RECOUVRIR UNE ZONE À L'INTÉRIEUR D'UN VÉHICULE AUTOMOBILE

(30) Priorität: 05.09.2018 DE 102018215110
(43) Veröffentlichungstag der Anmeldung: 14.07.2021
(73) Patentinhaber: VOLKSWAGEN AKTIENGESELLSCHAFT, 38440 Wolfsburg (DE)
(72) Erfinder: FROMMHOLZ, Dirk, 38518 Gifhorn (DE)
(86) Internationale Anmeldenummer: PCT/EP2019/072755
(87) Internationale Veröffentlichungsnummer: WO 2020/048817

(56) Entgegenhaltungen:
- DE-A1-102015 113 395
- DE-U1-202005 009 668
- FR-A1- 3 022 509
- FR-A1- 3 052 411
- JP-A- 2009 196 397
- US-A1- 2011 241 371
- US-A1- 2017 246 989

## Beschreibung

Die Erfindung betrifft eine Abdeckvorrichtung zum Abdecken eines Bereichs im Innenraum eines Kraftfahrzeugs mit den Merkmalen des Oberbegriffs des Patentanspruchs 1.

Man ist stets bemüht auch im Innenraum eines Kraftfahrzeugs neue und interessante Designmöglichkeiten zu schaffen. Einen wesentlichen Beitrag hierzu kann eine Ambientebeleuchtung im Kraftfahrzeuginnenraum leisten.

So beschreibt beispielsweise die DE 10 2012 017 597 A1 eine rolloartige Abdeckvorrichtung für eine als Getränkehalterung ausgebildete Ablage. Konkret ist eine außerhalb der Ablage angeordnete Lichtquelle vorhanden, deren Lichtstrahlen mit Hilfe von Lichtleitern in ein Betätigungselement der Abdeckvorrichtung ein- und auch wieder auskoppelbar sind. Auf diese Weise wird das Betätigungselement in einer die Ablage abdeckenden Ablagestellung der Abdeckvorrichtung beleuchtet.

Aus der DE 10 2013 004 633 A1 ist eine rolloartige Abdeckvorrichtung für eine Getränkehalterung mit einem ebenfalls beleuchtbaren Betätigungselement bekannt. Über eine bewegungsmäßig mit dem Betätigungselement mitgeführte Koppeleinrichtung wird die zum Beleuchten der Beleuchtungseinrichtung notwendige Energie von einem flexiblen Energiekabel bis zu einem Leuchtmittel geleitet, dessen Lichtstrahlen dann über einen Lichtleiter aus dem Betätigungselement in den Innenraum austreten.

Der DE 10 2012 215 165 A1 ist ein Dekorverbund mit dynamischen Lichtstrukturen zu entnehmen. Konkret wird ein Dekorverbund zur Verwendung für Dekorelemente in Fahrzeugen beschrieben, der eine zumindest teilweise durchleuchtbare Dekorschicht und eine unter dieser angeordneten Leuchtschicht mit lichtausstrahlenden Bereichen aufweist. Die Leuchtschicht ist relativ zur Dekorschicht beweglich ausgebildet. Sie kann beispielsweise eine lichtleitende Schicht sein, welche mit Störstellen versehen ist, die bei Einkopplung von Licht in die Leuchtschicht als diskrete, unterscheidbare Lichtquellen fungieren. Es wird vorgeschlagen, Licht mehrerer Lichtquellen seitlich in die Leuchtschicht einzukoppeln. Durch Beabstandung der Leuchtschicht von der Dekorschicht soll ein Funkeleffekt sowie ein dreidimensionaler Beleuchtungseffekt erzielt werden. Die Bewegung der Leuchtschicht gegenüber der Dekorschicht kann beispielsweise über motorisch angetriebene Rollen realisiert werden.

Die die Merkmale vom Oberbegriff des Patentanspruchs 1 aufweisende DE 20 2005 009 668 U1 beschreibt ein als Ablageschale für Utensilien ausgebildetes Kraftfahrzeugausstattungsteil. Dies weist ein Bodenteil mit Seitenwandungen und ein schwenkbares Deckelteil auf. Das Deckelteil besteht aus einer Blende und einem Blendenträger. Zwischen der Blende und dem Blendenträger ist eine Elektrolumineszenzfolie angeordnet, wobei in der Blende lichtdurchlässige Bereiche ausgebildet sind. Die lichtdurchlässigen Bereiche sind vom Licht der Elektrolumineszenzfolie durchleuchtbar.

In der US 2017/0246989 A1 wird ein Innenverkleidungsteil beschrieben, welches ein Ablagefach mit einer oberseitigen Zugangsöffnung ausbildet. Die Zugangsöffnung ist durch einen rolloartigen, flexiblen Verschluss abdeckbar. Der Verschluss umfasst zwei Lagen, und zwar einen elektrolumineszenten Bildschirm und eine Schutzschicht. Der Verschluss weist ferner eine Durchgangszone auf, die mittels einer Steuereinrichtung derart ansteuerbar ist, dass die Durchgangszone in einen transluzenten Modus oder in einen opaken Modus bringbar ist.

Der FR 3 052 411 A1 ist ein Ausstattungsteil zu entnehmen, welches eine Ablage ausbildet. Die Ablage ist über eine rolloartige Abdeckung abdeckbar, welche über eine Handhabe in eine Abdeck- oder Freigabestellung bringbar ist. Innerhalb der Abdeckung, von deren Material umspritzt, befinden sich mehrere aus Glasfaser bestehende, längliche Lichtleiter, die in Bewegungsrichtung der Abdeckung und parallel zueinander ausgerichtet sind. In jeder Stellung der Abdeckung wird über eine Lichtquelle Licht in eine stirnseitige Lichteinkoppelstelle des Lichtleiters eingekoppelt. Das eingekoppelte Licht kann über ritzenartige Öffnungen in einer sichtbaren Außenseite der Abdeckung wieder austreten.

Durch die US 2011/241371 A1 ist eine Ablage im Innenraum eines Kraftfahrzeugs bekannt, welche eine flexible Komponente in der Art eines Rolltors aufweist, um einen Ablageraum abzudecken oder freizugeben. Die flexible Komponente besteht aus einem Substrat, mit dem eine Vielzahl von Rippen verbunden ist. Die Rippen erstrecken sich mit ihrer Längserstreckung senkrecht zur Längserstreckung des Substrats und greifen mit beidseitig überstehenden Enden in Führungen der Ablage ein. Die Rippen sind so fest ausgebildet, dass die flexible Komponente Objekte tragen kann, die auf sie aufgelegt sind. Sowohl das Substrat als auch die Rippen sind lichtdurchlässig ausgebildet.

Die JP 2009 196397 A offenbart ein Innenverkleidungsteil mit einer rolloartigen Abdeckvorrichtung für eine Ablage. Die Abdeckvorrichtung umfasst eine lichtdurchlässige, lamellenartige Struktur, auf deren Rückseite ein Material mit geringerer Lichtdurchlässigkeit auflaminiert ist. An den Begrenzungsseiten der Ablage sind Lichtleiter einer Lichtleiteranordnung angeordnet. In einer Abdeckposition der Abdeckvorrichtung wird durch die Lichtleiter randseitig Licht in die lamellenartige Struktur eingekoppelt.

Der DE 10 2015 113395 A1 kann eine aus zwei Ablagefächern bestehende Ablage entnommen werden. Als Abdeckvorrichtung der Ablagefächer dienen eine erste und eine zweite Verschließeinheit. Die Verschließeinheiten weisen eine obere Dekorschicht auf, die auf einer flexiblen Trägerschicht aufliegt. Rippenartige Führungselemente erstrecken sich unterhalb der Trägerschicht und greifen mit seitlichen Führungsansätzen in seitliche Führungen der Ablage ein.

Aus der FR 3 022 509 A1 ist ein Innenaustattungsteil für ein Kraftfahrzeug bekannt, welches für eine Ablage ein flexibles Verschlusselement aufweist, das in seitlichen Führungen geführt ist. Das Verschlusselement hat mehrere Lichtleiter, welche senkrecht zur Längserstreckung des Verschlusselementes angeordnet sind. In jeden der Lichtleiter ist über randseitig angeordnete Leuchtmittel Licht einkoppelbar. Zur Stromversorgung der Leuchtmittel dienen Leiterbahnen, die innerhalb der seitlichen Führungen angeordnet sind.

Schließlich wird in der DE 10 2012 024 667 A1 eine Beleuchtungseinrichtung für das Betätigungselement einer Abdeckvorrichtung eines Getränkehalters beschrieben. Die Beleuchtungseinrichtung weist eine Leiteinrichtung zur Übertragung von elektrischer Energie und/oder Licht zwischen einem Gehäuse des Getränkehalters und der Abdeckvorrichtung auf.

Ausgehend vom vorgenannten Stand der Technik besteht die Aufgabe der vorliegenden Erfindung darin, eine Abdeckvorrichtung mit den Merkmalen des Oberbegriffs des Patentanspruchs 1 bereitzustellen, mit der die Voraussetzungen zur Erzeugung eines ansprechenden Ambientelichts geschaffen werden und die einfach herzustellen ist. Insbesondere soll die Abdeckvorrichtung auf einfache Weise in Bewegungsrichtung flexibel und quer zur Bewegungsrichtung unflexibel ausgebildet ist, wobei dennoch eine ausreichende Stabilität ermöglicht werden kann.

Eine weitere Aufgabe der Erfindung liegt darin, einen Ablagebereich bzw. eine Ablage für ein Kraftfahrzeug bereitzustellen, welcher bzw. welche in einem abgedeckten Zustand zu einer Ambientebeleuchtung in einem Kraftfahrzeug beitragen kann.

Vorliegende Aufgaben werden durch eine Abdeckvorrichtung mit den Merkmalen des Patentanspruchs 1, durch einen Ablagebereich mit den Merkmalen des Patentanspruchs 8 und durch ein Kraftfahrzeug mit den Merkmalen des Patentanspruchs 9 gelöst. Vorteilhafte Ausbildungen beziehungsweise Weiterbildungen der Erfindung sind den abhängigen Ansprüchen zu entnehmen.

Hinsichtlich der Abdeckvorrichtung geht die Erfindung aus von einer Abdeckvorrichtung zum Abdecken eines Bereichs im Innenraum eines Kraftfahrzeugs, welche in Montageposition, also in einem im Innenraum montierten Zustand, in einer Bewegungsrichtung in eine den Bereich abdeckende Abdeckstellung und in eine den Bereich freigebende Freigabestellung bewegbar ist. Es ist dabei wenigstens ein Teil der Abdeckvorrichtung beleuchtbar. Der abzudeckende Bereich kann dabei vielfältige Ausprägungen annehmen. Der Bereich kann beispielsweise durch eine Ablage (wie beispielsweise einen Getränkehalter oder ein Ablagefach) zur Ablage von Gegenständen, durch einen Schalter aufweisenden Schalterbereich oder auch durch einen elektronische Anschlüsse (z.B. USB, HDMI, 12V) aufweisenden Anschlussbereich gebildet sein. Auch Kombinationen davon sind denkbar. Die Aufzählung ist rein beispielhaft.

Gewöhnlich wird ein abzudeckender Bereich, wie beispielsweise eine Ablage, durch ein formstabiles Formteil gebildet oder zumindest gestützt. Eine Ablage in Form eines Getränkehalters kann bei Benutzung zur Ablage von Getränkeflaschen oder -bechern dienen und bei Nichtbenutzung durch die Abdeckvorrichtung verschlossen werden. Die beispielhaft genannten, abzudeckenden Bereiche können an diversen Orten im Innenraum des Kraftfahrzeugs angeordnet sein, beispielsweise in der Mittelkonsole, in der Instrumententafel, in den Türverkleidungen oder auch im Dachhimmel. Die Aufzählung soll nicht als abschließend gewertet werden.

Es wird ferner vorgeschlagen, dass die Abdeckvorrichtung zumindest bereichsweise aus mehreren Lagen besteht. Es ist wenigstens eine einem Benutzer im Montagezustand zugewandte, zumindest bereichsweise lichtdurchlässige, obere Lage vorhanden. Ferner weist die Abdeckvorrichtung wenigstens eine stützende untere Lage und wenigstens eine zwischen der oberen und der unteren Lage aufgenommene, Licht transportierende Lage auf.

Durch die Licht transportierende Lage sind Lichtstrahlen in Richtung der oberen Lage transportierbar. Der Lichttransport kann in dieser Lage vorzugsweise durch eine Lichtleitung oder Lichtreflexion bewerkstelligt werden. Ferner sind die Lagen miteinander verbunden.

Es sei darauf hingewiesen, dass sich jede Lage in einem bestimmten Ebenenbereich der Abdeckvorrichtung senkrecht zu deren Längserstreckung befindet, welcher jeweils eine bestimmte Funktion ausfüllt. Die Funktion kann beispielsweise eine dekorative, eine stützende, eine flexibilisierende, eine Licht abgebende, eine schaltende oder auch eine Informationen abgebende Funktion sein. Die Lagen müssen in ihrer Flächenerstreckung nicht gleich groß ausgebildet sein. Es ist beispielsweise denkbar, dass eine Lage mit einer sehr viel kleineren Flächenerstreckung als eine andere nur in einem kleinen Bereich auf oder unter der anderen Lage angeordnet ist. Es ist auch denkbar, dass in einem Ebenenbereich mehrere Lagen nebeneinander angeordnet sind, die dann jedoch gleiche oder ähnliche Funktionen ausfüllen. Beispielsweise können in einem oberen, dem Benutzer zugewandten Ebenenbereich zwei oder mehr Lagen mit unterschiedlichem Dekor angeordnet sein. Eine Lage kann auch durch einen örtlichen Aufdruck auf eine andere, beispielsweise als Folie ausgebildete Lage realisiert sein.

Es ist auf diese Weise möglich, eine Abdeckvorrichtung zum Abdecken eines Bereichs im Innenraum eines Kraftfahrzeugs bereitzustellen, mit der die Grundvoraussetzung dafür geschaffen wird, dass mit der Abdeckvorrichtung ein interessantes Ambientelicht erzeugt werden kann und die Abdeckvorrichtung auf einfache Weise und damit kostengünstig herstellbar ist.

Zur Herstellung der Abdeckvorrichtung ist es beispielsweise denkbar, die unterschiedlichen Lagen der Abdeckvorrichtung in ein geeignetes Spritzgießwerkzeug einzulegen und direkt zu hinterspritzen, so dass ein gewünschter Systemverbund der Lagen erzeugt wird. Alternativ ist auch denkbar, die Lagen einzeln oder in vorgefertigten Teilverbunden aufeinander zu fügen und beispielsweise zu verkleben und/oder zu verpressen.

Der Verbund der Abdeckvorrichtung kann auch dadurch gebildet werden, dass eine Folie als Substrat einseitig oder beidseitig, bei Bedarf jeweils auch in mehreren Lagen bedruckt wird.

Eine Weiterbildung der Erfindung schlägt vor, dass zwischen der oberen Lage und der unteren Lage zusätzlich wenigstens eine sensorische Lage angeordnet ist, welche einen oder mehrere Sensoren enthält.

Die Sensoren können beispielsweise berührungssensitiv oder kapazitiv ausgebildet sein. Auf diese Weise kann die Abdeckvorrichtung neben der Realisierung einer Ambientebeleuchtung noch zur Realisierung weiterer Funktionen dienen. Beispielsweise können dadurch Schalter-, Warn- und/oder Hinweisfunktionen realisiert werden.

Die besagte sensorische Lage kann beispielsweise als Sensormatte ausgebildet sein, über deren gesamte Flächenerstreckung Sensoren angeordnet sind. Es ist auch denkbar, dass lediglich einzelne Sensoren oder einzelne Anordnungen von Sensoren an bestimmten, ausgewählten Stellen der sensorischen Lage angeordnet sind. Auch ist es möglich in der Flächenerstreckung gesehen jeweils kleinere sensorische Lagen als die obere Lage unter der oberen Lage bedarfsgerecht zu verteilen.

Nach einer anderen Ausbildung des Erfindungsgedankens ist die Licht abgebende Lage zumindest bereichsweise lichtleitend oder lichtreflektierend ausgebildet. Dies erfolgt derart, dass seitlich in die Licht abgebende Lage eingekoppelte Lichtstrahlen von dieser Lage in Richtung der oberen Lage auskoppelbar sind.

Eine derartige Ausgestaltung trägt zu einer effektiven Generierung einer Beleuchtung der Abdeckvorrichtung und zu einem kompakten Aufbau bei, wenn die Abdeckvorrichtung selbst nicht über eigene Leuchtmittel verfügt.

In einer anderen Ausbildung der Erfindung ist denkbar, dass alternativ oder zusätzlich in der Licht abgebenden Lage selbst wenigstens ein Leuchtmittel aufgenommen ist, welches Lichtstrahlen in Richtung der oberen Lage abstrahlt. Durch eine derartige, direkte Beleuchtung der oberen Lage kann ein sehr intensives Leuchten der Abdeckvorrichtung realisiert werden. Eine derartige Ausbildung kann vorzugsweise dann zum Einsatz kommen, wenn genügend Bauraum zur Verfügung steht.

Es ist ferner sehr zweckmäßig, wenn die obere Lage, die untere Lage und die zwischen diesen angeordneten Lagen zumindest in der Bewegungsrichtung flexibel ausgebildet sind. Auf diese Weise ist eine leichte Verformung der Abdeckvorrichtung in Bewegungsrichtung möglich. Die Abdeckvorrichtung kann beispielsweise rolloartig ausgebildet sein. In diesem Fall ist eine platzsparende Aufwicklung der Abdeckvorrichtung an einem Ende möglich.

Hinsichtlich der unteren Lage wird gemäß der Erfindung vorgeschlagen, diese zumindest quer zur Bewegungsrichtung unflexibel, also nicht oder nur unwesentlich bieg- bzw. verformbar auszubilden. Auf diese Weise kann diese Lage trotz gewisser Flexibilität sehr gut eine stützende Funktion ausfüllen.

Gemäß der Erfindung wird zudem vorgeschlagen, dass die untere Lage aus einer rippenartigen Struktur besteht. Die rippenartige Struktur wird durch eine Vielzahl von quer zur Bewegungsrichtung verlaufenden, länglichen Elementen gebildet, wobei die rippenartige Struktur mit einer flexiblen Lage verbunden ist und wobei jedes Element aus einem Basisteil mit einem im Querschnitt rechteckförmigen Umriss und einem daran angeformten, nach unten abstehenden, rippenartigen Teil besteht. Dabei können die länglichen Elemente als einzelne Elemente oder auch als vorgefertigter Verbund, beispielsweise durch Hinterspritzung, mit der flexiblen Schicht verbunden werden.

Dies ermöglicht auf einfache Weise, die Abdeckvorrichtung in Bewegungsrichtung flexibel und quer zur Bewegungsrichtung unflexibel auszubilden.

In diesem Fall ist es sehr zweckmäßig, wenn die untere Lage aus zwei Komponenten besteht. Mit anderen Worten stellen die rippenartige Struktur eine erste Komponente und die flexible Lage eine zweite Komponente der unteren Lage dar.

Alternativ ist auch denkbar, die flexible Lage auf die rippenartige Struktur aufzulaminieren. Die flexible Lage kann beispielsweise als textiler Stoff oder als Folie ausgebildet sein.

Um Lichteffekte auch bei in die Abdeckvorrichtung integrierten Schaltern oder Funktionseinheiten darstellen zu können, wird vorgeschlagen, dass zwischen der oberen und der unteren Lage wenigstens eine weitere Licht abgebende Lage angeordnet ist. Diese weitere Licht abgebende Lage kann über, unter oder - bei entsprechend kleinerer Flächenerstreckung der Licht abgebenden Lagen - auch neben der anderen Licht abgebenden Lage angeordnet sein.

Zusammenfassend besteht die Abdeckvorrichtung also zumindest bereichsweise aus wenigstens einer oberen, wenigstens einer unteren und wenigstens einer zwischen der oberen und der unteren aufgenommenen, mittleren Lage.

Die obere Lage stellt für den Kunden eine sichtbare und fühlbare Oberfläche dar. Diese Lage muss derart beschaffen sein, dass sie lichtdurchlässig ist. Sie muss also zumindest transluzent (lichtdurchscheinend) ausgebildet sein. Erreicht werden kann dies entweder durch eine geeignete Materialwahl, bei der das Material schon eine Lichtdurchlässigkeit mitbringt, und/oder auch über eine geeignete, lokale Bearbeitung der oberen Lage.

Als Materialien kommen beispielsweise Stoffe, Mischgewebe, Echtleder, Folien, Kunstleder und Holz in Betracht. Zur Erreichung einer gewünschten Durchlässigkeit kann ein Material auch in geeigneter Weise gelasert, geätzt, ausgeschärft, gewebt, gelocht, maskiert, teillackiert oder auch bedruckt sein.

Die oben erwähnten Aufzählungen sind als nicht abschließend und lediglich als bevorzugte Möglichkeiten zu betrachten.

Durch die untere Lage wird vornehmlich eine Stütze beziehungsweise ein Rückgrat der Abdeckvorrichtung gebildet. Die untere Lage kann in der Montageposition der Abdeckvorrichtung an einer Ablage teilweise auch als Führungsmittel der Abdeckvorrichtung in seitlichen längs der Bewegungsrichtung angeordneten Führungsbahnen der Abdeckvorrichtung dienen. Des Weiteren kann die untere Lage zur Aufnahme oder Befestigung von Lichtleitelementen zur Zuführung von Licht, zur Aufnahme oder Befestigung von Leuchtmitteln und/oder zur Aufnahme oder Befestigung von Leiterbahnen dienen, über die ein Energie- und/oder Signalfluss ermöglicht wird.

Die zwischen der oberen und der unteren Lage aufgenommene, mittlere Lage kann wenigstens die erwähnte Licht abgebende und/oder die erwähnte sensorische Lage aufweisen.

Die Licht abgebende Lage kann beispielsweise durch lichtleitende/lichttransportierende Folien, Weichkomponenten oder Webmaterialien gebildet sein. Bei einer gewünschten Flexibilität ist es wichtig, dass hier flexible Werkstoffe mit guten bis sehr guten Lichttransporteigenschaften eingesetzt werden. Der elektrische Anschluss dieser Lage kann beispielsweise über aufgedruckte Leiterbahnen erfolgen. Alternativ sind auch mitgeführte Kabel denkbar.

Die Licht abgebende Lage oder mehrere solcher Lagen können auch als selbstständig zum Beleuchten anregbare Leuchtfolien ausgebildet sein. Kern derartiger Leuchtfolien ist ein Kunststoff auf Kohlenstoffbasis, der bei Anlegen einer elektrischen Spannung Licht abstrahlt und aus sogenannten lichtemittierenden elektrochemischen Zellen (LECs = Light Emitting Electrochemicals Cells) aufgebaut ist. Die Herstellung derartiger Leuchtfolien ist wesentlich einfacher als die Herstellung von OLEDs (organische Leuchtdioden), die aufgrund ihrer flachen Bauweise ebenfalls gut zum Einsatz in der Abdeckvorrichtung geeignet sind.

Wie bereits erwähnt, kann die mittlere Lage jedoch auch eine sensorische Lage enthalten, die als Sensormatte ausgebildet sein kann. Alternativ kann diese Lage lediglich an solchen Stellen einzelne Sensorelemente aufweisen, an denen Schalter- oder Signalfunktionen realisiert werden sollen.

Auch für die sensorische Lage kommen bei erwünschter Flexibilität, beispielsweise hinsichtlich einer Aufroll- beziehungsweise Umlenkbarkeit bei einer rolloartigen Ausgestaltung, flexible Werkstoffe zum Einsatz.

Ein elektrischer Anschluss der sensorischen Lage kann über aufgedruckte Leiterbahnen oder auch über mitgeführte Kabel und flexible Platinen erfolgen.

Wie bereits erwähnt, soll mit der Erfindung auch ein Ablagebereich bzw. eine Ablage für ein Kraftfahrzeug unter Schutz gestellt werden. Ein derartiger Ablagebereich beziehungsweise der dadurch zur Verfügung gestellte Ablageraum ist durch ein formstabiles Formteil gebildet. Das Formteil kann beispielsweise das Gehäuse einer Getränkehalterung (sogenannter Cupholder) ausbilden.

Es ist auch denkbar, dass durch das formstabile Formteil ein Ablagebereich beziehungsweise Ablageraum gebildet wird, welcher in einer Mittelkonsole, in einer Instrumententafel, in einer Tür- oder Seiteninnenverkleidung, in einem Dachhimmel oder an anderer Stelle im Innenraum eines Kraftfahrzeugs integriert sein kann.

Der Ablagebereich bzw. die Ablage ist durch eine erfindungsgemäße Abdeckvorrichtung gekennzeichnet, durch welche die Ablage abgedeckt werden kann.

Schließlich soll mit der Erfindung auch noch ein Kraftfahrzeug unter Schutz gestellt werden. Dieses ist mit wenigstens einer erfindungsgemäßen Abdeckvorrichtung ausgestattet.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: eine perspektivische Darstellung einer Abdeckvorrichtung,
- Fig. 2: eine Schnittdarstellung gemäß Schnittverlauf II aus Fig. 1,
- Fig. 3: eine perspektivische Schnittdarstellung einer erfindungsgemäßen Abdeckvorrichtung,
- Fig. 4: eine perspektivische Darstellung einer Ablage mit der Abdeckvorrichtung,
- Fig. 5: ein Kraftfahrzeug mit erfindungsgemäßen Abdeckvorrichtungen,
- Fig. 6: das Kraftfahrzeug gemäß Fig. 5 aus einer anderen Perspektive,
- Fig. 7: eine Abdeckvorrichtung in einer weiteren Ausführungsform,
- Fig. 8: eine Schnittansicht gemäß Schnittverlauf VIII aus Fig. 7,
- Fig. 9: eine Darstellung gemäß Ansicht IX aus Fig. 7 und
- Fig. 10: eine weitere Ausführungsform der Abdeckvorrichtung in einer Ansicht vergleichbar mit Fig. 9.

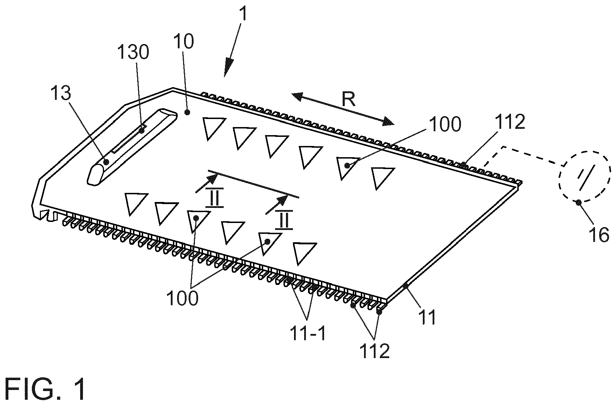

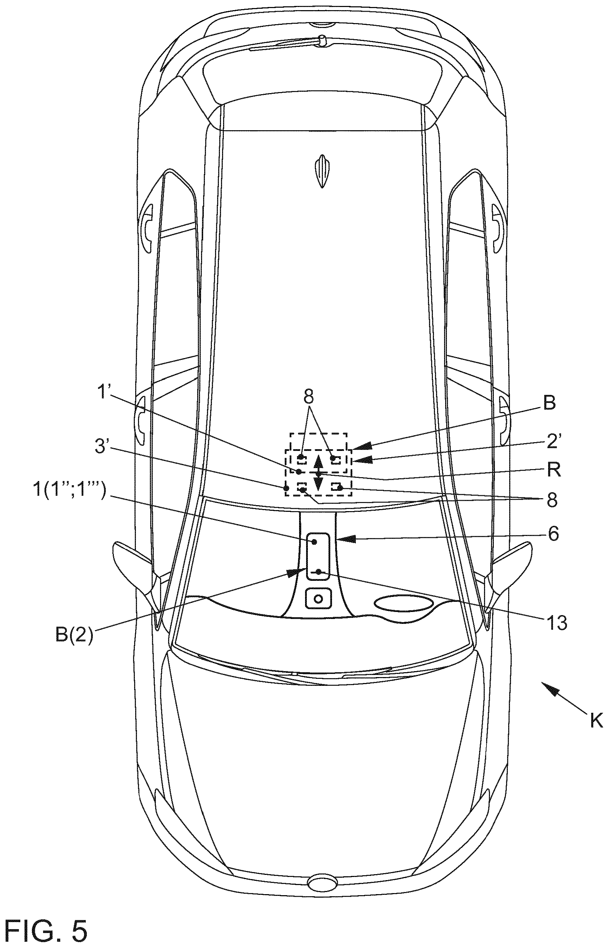

Es wird zunächst auf die Figuren 1 bis 3 Bezug genommen. Darin ist eine Abdeckvorrichtung 1 ersichtlich, mit der eine Ablage 2 in einem Kraftfahrzeug K (vergleiche auch Fig. 5) abgedeckt werden kann. Die Abdeckvorrichtung 1 ist rolloartig ausgebildet und wird in einer Montageposition an der Ablage 2 in einer Bewegungsrichtung R bewegt, insbesondere auf- oder abgerollt.

Zur Bewegung der Abdeckvorrichtung 1 dient eine Handhabe 13, in die ein Lichtleiter 130 eingelassen ist. Über ein nicht näher dargestelltes Leuchtmittel kann Licht in den Lichtleiter 130 eingekoppelt werden, so dass dieses an einer Austrittsstelle des Lichtleiters 130 in Richtung eines Innenraums austreten kann.

Die Abdeckvorrichtung 1 weist im Umriss eine in etwa rechteckige, langgestreckte Form auf. Andere Formen sind je nach Anwendungsfall denkbar.

Die Abdeckvorrichtung 1 besteht aus mehreren, übereinander angeordneten Lagen, welche miteinander verbunden sind, so dass sich ein die Abdeckvorrichtung 1 ausbildender Systemverbund ergibt.

So ist zunächst eine obere Lage 10 vorhanden, welche in Montageposition einem Bediener zugewandt ist und eine dekorative Funktion ausführt. Unter der oberen Lage 10 ist eine untere Lage 11 angeordnet, welche eine stützende Funktion ausführt. Zwischen der oberen und der unteren Lage (10 und 11) ist eine Licht abgebende Lage 12 vorhanden. Die Lage 12 dient zur Beleuchtung bzw. Durchleuchtung der oberen Lage 10. Sie nimmt mehrere Leuchtmittel 120 auf, deren Lichtstrahlen L in Richtung der oberen Lage 10 abstrahlbar sind. Die Leuchtmittel 120 sind vorzugsweise als Leuchtdioden (LEDs) oder als organische Leuchtdioden (OLEDs) ausgebildet.

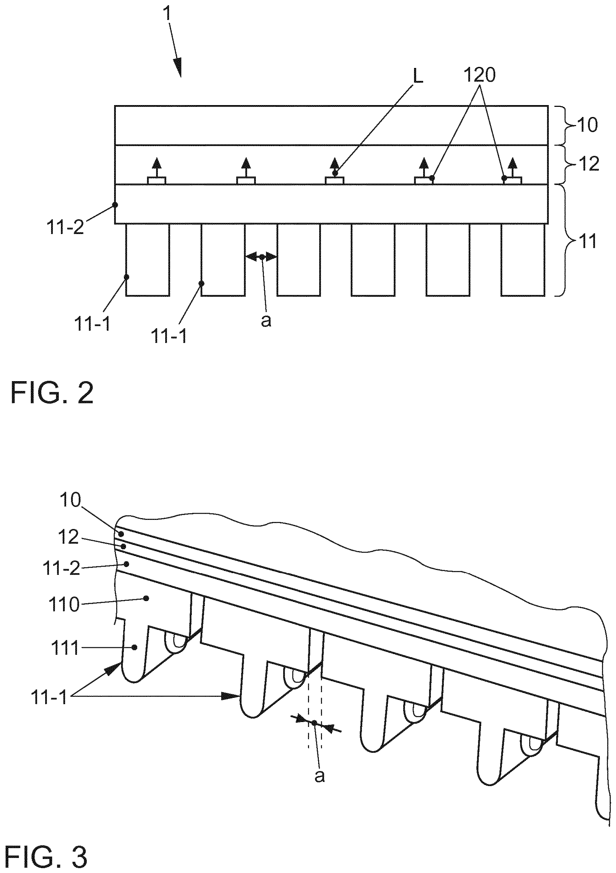

Um der Abdeckvorrichtung 1 ausreichende Stabilität, aber dennoch eine gewünschte Flexibilität in Bewegungsrichtung R zu verleihen, ist die untere Lage 11 aus länglichen Elementen 11-1 aufgebaut, welche mit einer flexiblen Lage 11-2 verbunden sind. Die länglichen Elemente 11-1 sind mit ihrer Längserstreckung senkrecht zur Bewegungsrichtung R angeordnet und weisen in Bewegungsrichtung R einen gegenseitigen Abstand a zueinander auf (vergleiche Fig. 2).

Wie aus der detaillierteren Darstellung gemäß Fig. 3 deutlich wird, besteht jedes Element 11-1 aus einem Basisteil 110 mit einem im Querschnitt rechteckförmigen Umriss und einem daran angeformten, nach unten abstehenden, rippenartigen Teil 111. Der erwähnte Abstand a ist konkret bereits zwischen den Basisteilen 110 realisiert. Auf diese Weise kann, in Zusammenwirkung mit der flexiblen Lage 11-2, eine gewünschte Flexibilität in Bewegungsrichtung R und dennoch eine ausreichende Stabilität erzielt werden.

Die Länge der länglichen Elemente 11-1 ist derart bemessen, dass diese zu beiden Seiten der oberen Lage 10 mit einem Überstand 112 hervorstehen (vergleiche Fig. 1).

Um mittels der Abdeckvorrichtung 1 eine intensivere Ambientebeleuchtung realisieren zu können, ist die obere Lage 10 mit mehreren lichtdurchlässigen Bereichen 100 versehen. Abweichend vom Ausführungsbeispiel ist auch denkbar, die gesamte obere Lage 10 lichtdurchlässig auszubilden.

Zur Stromversorgung der Leuchtmittel 120 können diese bzw. kann die Licht abgebende Lage 12 im Montagezustand der Abdeckvorrichtung 1 mit einer angedeuteten Spannungsquelle 16 eines Kraftfahrzeugs (vorzugsweise Bordnetz) verbunden sein.

Die elektrische Verbindung zwischen der Abdeckvorrichtung 1 und der Spannungsquelle 16 kann über nicht näher dargestellte elektrische Verbindungen erfolgen. Diese können beispielsweise als auf der Lage 12 aufgedruckte Leiterbahnen oder auch als mitgeführte Kabel ausgebildet sein.

In einer senkrecht zur Bewegungsrichtung R verlaufenden Richtung weist die untere Lage 11, bedingt durch die senkrecht zur Bewegungsrichtung R verlaufenden Elemente 11-1, eine ausreichende, stützende Stabilität auf. Daher ist eine Biegung der Abdeckvorrichtung 1 senkrecht zur Bewegungsrichtung R nicht oder nur in einem zu vernachlässigenden Maß möglich.

Durch die bereits erwähnten Basisteile 110 wird nach oben eine ausreichende Kontaktfläche zwischen der flexiblen Lage 11-2 und den länglichen Elementen 11-1 ermöglicht. Die untere Lage 11 besteht insbesondere aus zwei verschiedenen Komponenten, wobei die länglichen Elemente 11-1 durch eine unflexible, feste Komponente und die flexible Lage 11-2 durch eine flexible, stark biegsame Komponente gebildet wird.

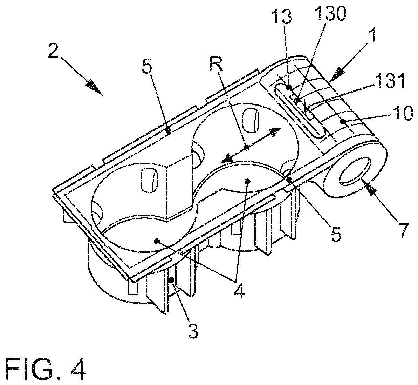

In der Fig. 4 ist eine Ablage 2 dargestellt, welche als Getränkehalterung (sogenannter Cupholder) ausgebildet ist. Die Ablage 2 ist durch ein formstabiles Formteil 3 gebildet, in welchem zwei Ablageräume 4 ausgeformt sind. Jeder Ablageraum 4 kann zur Aufnahme eines Getränkegefäßes dienen.

Des Weiteren ist die Abdeckvorrichtung 1 in Montageposition ersichtlich, wobei sich die Abdeckvorrichtung 1 in einer die Ablage 2 beziehungsweise die Ablageräume 4 freigebenden Freigabestellung befindet. Insbesondere ist die Abdeckvorrichtung 1 in ihrer Freigabestellung über eine Aufrollvorrichtung 7 aufgerollt. Zum Aufrollen beziehungsweise Abrollen wird die Abdeckvorrichtung 1 mittels der Handhabe 13 in Bewegungsrichtung R zwischen einer seitlichen Schienenführung 5 hin und her bewegt. Dabei greifen die erwähnten Überstände 112 (vgl. Fig. 1) in die Schienenführung 5 ein.

In der gezeigten Montageposition der Abdeckvorrichtung 1 ist für einen Benutzer lediglich die obere Lage 10 ersichtlich. In den Lichtleiter 130 eingekoppeltes Licht einer nicht näher dargestellten Lichtquelle ist über eine Lichtabstrahlfläche 131 nach oben hin auskoppelbar. Die Abdeckvorrichtung 1 kann in Bewegungsrichtung R so weit abgerollt werden, bis sie die Ablageräume 4 komplett überdeckt.

In der Fig. 5 ist nun ein Kraftfahrzeug K ersichtlich, in dem die Ablage 2 in einer Mittelkonsole 6 montiert ist und dort einen abzudeckenden Bereich B ausbildet. In der Darstellung befindet sich die Abdeckvorrichtung 1 der Ablage 2 in einer den Bereich B bzw. die Ablage 2 abdeckenden Abdeckstellung.

Des Weiteren ist ein zweiter abzudeckender Bereich B ersichtlich, welcher im Dachhimmel des Kraftfahrzeugs K angeordnet ist. Der zweiter Bereich B weist eine Abdeckvorrichtung 1' auf und wird aus einem formstabilen Formteil 3' mit mehreren Schaltern 8 gebildet. Die Schalter 8 können beispielsweise zur Aktivierung einer Innenraumbeleuchtung dienen.

Im Unterschied zur Abdeckvorrichtung 1 ist bei der Abdeckvorrichtung 1' die untere Lage 11 in keiner Richtung flexibel ausgebildet. Vielmehr ist die untere Lage 11 plattenartig, also starr ausgestaltet und bildet für die Abdeckvorrichtung 1' sowohl in Bewegungsrichtung R als auch senkrecht dazu eine Stütze. Wird die Abdeckvorrichtung 1' entgegen einer gewöhnlichen Fahrtrichtung in eine den Bereich B freigebende Stellung gebracht, so wird die Abdeckvorrichtung 1' als ebenfalls formstabiles Bauteil in einen geeigneten Aufnahmeraum des Dachhimmels oder des formstabilen Formteils 3' verschoben.

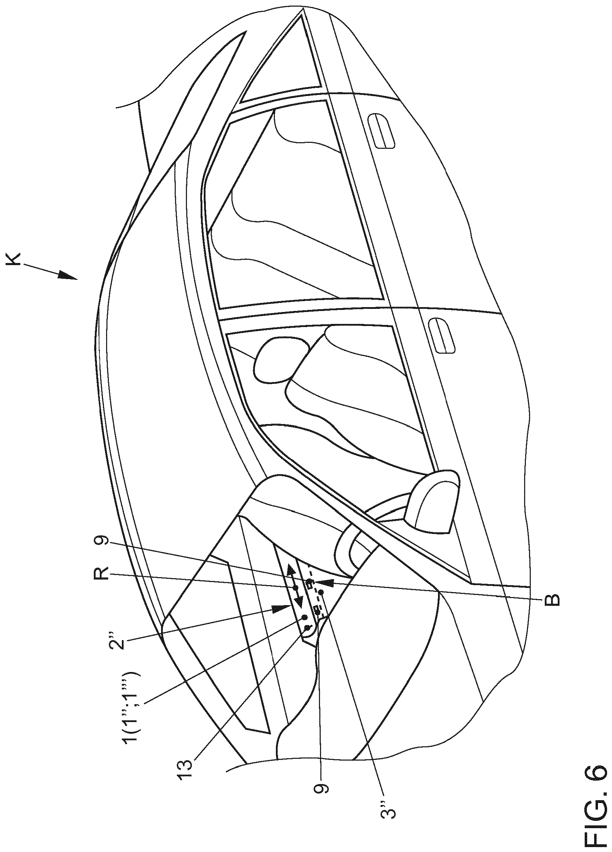

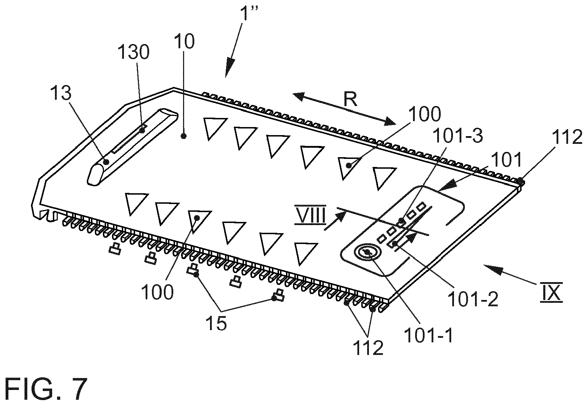

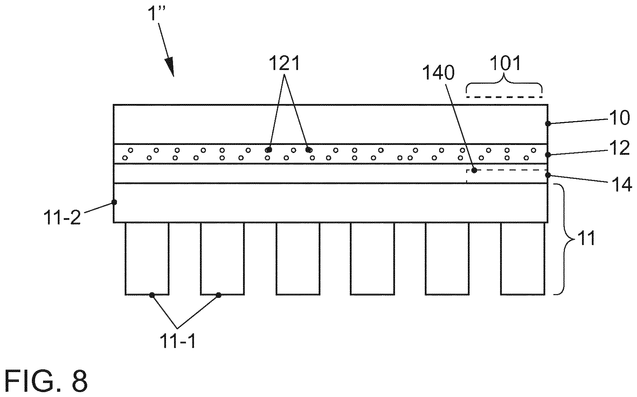

Das Kraftfahrzeug K weist auch einen durch ein formstabiles Formteil 3" gebildeten, abzudeckenden Bereich B in der Türverkleidung der Beifahrertür auf (vergleiche Fig. 6). Der abzudeckende Bereich B weist mehrere elektrische Anschlüsse 9 aus, die beispielsweise als USB-, 12V- und/oder als HDMI-Anschlüsse ausgebildet sein können. Der Bereich B ist an dieser Stelle durch eine rolloartige Abdeckvorrichtung 1 abgedeckt oder abdeckbbar. Es ist aber auch denkbar, dass Abdeckvorrichtungen 1" und 1‴ verwendet werden, wie sie in den Fig. 7 bis 10 beschrieben sind.

So zeigen die Fig. 7 bis 9 eine Abdeckvorrichtung 1", die im Unterschied zur Abdeckvorrichtung 1 eine lichtleitende Lage 12 aufweist, in der keine Leuchtmittel aufgenommen sind. Vielmehr sind in der lichtleitenden Lage 12 eine Reihe von Störstellen 121 angeordnet.

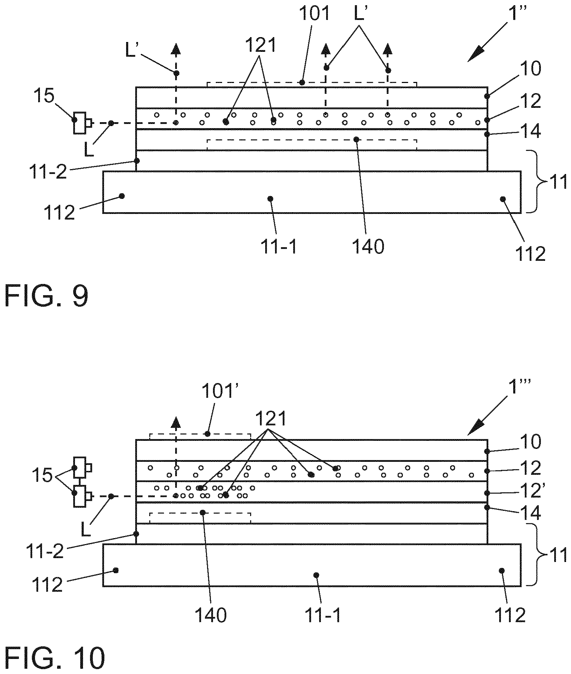

Werden in der Montageposition der Abdeckvorrichtung 1" nun Lichtstrahlen L von Leuchtmitteln 15 seitlich in die Lage 12 eingekoppelt, so werden diese an den Störstellen 121 in Richtung der oberen Lage 10 wieder ausgekoppelt (vgl. Fig. 9). Durch eine derartige Konstruktion kann die Abdeckvorrichtung 1" noch flacher aufgebaut werden.

Des Weiteren ist die Abdeckvorrichtung 1" auf der Oberseite der oberen Lage 10 mit einem flächigen Bedienbereich 101 versehen. Der flächige Bedienbereich 101 wird optisch durch abgegrenzte, lichtdurchlässige Bereiche der oberen Lage 10 gebildet, wobei als lichtdurchlässige Bereiche eine Klimatisierungsaktivierung 101-1, eine Klimatisierungseinstellung 101-2 und eine Klimatisierungsanzeige 101-3 vorhanden sind.

Diese lichtdurchlässigen Bereiche können durch die in Richtung der oberen Lage 10 ausgekoppelten Lichtstrahlen L' der Leuchtmittel 15 hinterleuchtet und somit sichtbar gemacht werden.

Unterhalb der Lage 12 ist wiederum eine sensorische Lage 14 angeordnet. Die sensorische Lage 14 weist im Bereich des flächigen Bedienbereiches 101 einen Sensorbereich 140 mit Sensoren auf, welche auf eine Berührung und/oder Annäherung eines menschlichen Bedienwerkzeugs (Finger oder dergleichen) an den Bedienbereich 101 reagieren.

So kann beispielsweise durch Berührung der Klimatisierungsaktivierung 101-1 eine Klimatisierung einer durch die Abdeckvorrichtung 1" abgedeckten Ablage in einer bestimmten, voreingestellten Klimatisierungsstufe aktiviert werden. In analoger Weise kann durch die pfeilartige Klimatisierungseinstellung 101-2 die Einstellung einer bestimmten Klimatisierungsstufe vorgenommen werden. Schließlich ermöglicht die Klimatisierungsanzeige 101-3 eine Anzeige der gewählten Klimatisierungsstufe (beispielsweise Stufen 1 bis 5 möglich).

Eine entsprechend notwendige Energieversorgung der Abdeckvorrichtung 1" und Kopplung mit einer ebenso notwendigen Steuerungselektronik ist nicht näher dargestellt und ist für das Verständnis der Erfindung auch nicht unbedingt notwendig.

Die in der Fig. 10 ersichtliche Abdeckvorrichtung 1‴ weist im Unterschied zur Abdeckvorrichtung 1" zusätzlich zur Lage 12 noch eine weitere Licht transportierende Lage 12' auf. Unter der Lage 12' ist wiederum die sensorische Lage 14 vorhanden, wobei diese einen Sensorbereich 140' aufweist, welcher deutlich kleiner ist als der Sensorbereich 140. Des Weiteren ist ersichtlich, dass die Lage 12' lediglich im Bereich des Sensorbereichs 140' mit Störstellen 121 versehen ist.

Durch diesen Aufbau wird es im Montagezustand der Abdeckvorrichtung 1‴ ermöglicht, die Lagen 12 und 12' getrennt und unabhängig voneinander mit Lichtstrahlen L von Leuchtmitteln 15 zu beaufschlagen. Insbesondere ist es möglich, bei Auskopplung von Lichtstrahlen L' durch die in der Lage 12' vorhandenen Störstellen 121 lediglich einen kleinen Bedienbereich 101' zu hinterleuchten, welcher auf der oberen Lage 10 im Bereich des Sensorbereichs 140' angeordnet ist.

Im Übrigen ist es zweckmäßig, wenn Leuchtmittel eingesetzt werden, die Lichtstrahlen in beliebigen Farben aussenden können. Mittels einer geeigneten Steuerung kann dann ausgewählt werden, in welcher Farbe beziehungsweise in welchen Farben das Licht der Leuchtmittel 15 beziehungsweise 120 ausgesendet werden soll.

### Bezugszeichenliste

- 1, 1', 1", 1‴: Abdeckvorrichtung
- 2: Ablage
- 3, 3', 3": formstabiles Formteil
- 4: Ablageräume
- 5: Schienenführung
- 6: Mittelkonsole
- 7: Aufrollvorrichtung
- 8: Schalter
- 9: Anschlüsse
- 10: obere Lage
- 11: untere Lage
- 11-1: längliche Elemente
- 11-2: flexible Lage
- 12, 12': Licht transportierende Lage
- 13: Handhabe
- 14: sensorische Lage
- 15: Leuchtmittel
- 16: Spannungsquelle
- 100: lichtdurchlässige Bereiche
- 101, 101': flächiger Bedienbereich
- 101-1: Klimatisierungsaktivierung
- 101-2: Klimatisierungseinstellung
- 101-3: Klimatisierungsanzeige
- 110: Basisteil
- 111: rippenartiges Teil
- 112: Überstand
- 120: Leuchtmittel
- 121: Störstellen
- 130: Lichtleiter
- 131: Lichtabstrahlfläche
- 140, 140': sensorische Lage mit Sensoren
- a: Abstand
- B: abzudeckende Bereiche
- K: Kraftfahrzeug
- L, L': Lichtstrahlen
- R: Bewegungsrichtung

## Patentansprüche

1. Abdeckvorrichtung (1, 1', 1", 1‴) zum Abdecken eines Bereichs (B) im Innenraum eines Kraftfahrzeugs (K), wobei die Abdeckvorrichtung (1, 1', 1", 1‴) in Montageposition in einer Bewegungsrichtung (R) in eine den Bereich (B) abdeckende Abdeckstellung und in eine den Bereich (B) freigebende Freigabestellung bewegbar ist, und wobei wenigstens ein Teil der Abdeckvorrichtung (1, 1', 1", 1‴) beleuchtbar ist, wobei die Abdeckvorrichtung (1, 1', 1", 1‴) zumindest bereichsweise aus mehreren Lagen (10, 11, 12, 14) besteht, mit wenigstens einer einem Benutzer im Montagezustand zugewandten, zumindest bereichsweise lichtdurchlässigen, oberen Lage (10), wenigstens einer stützenden unteren Lage (11) und wenigstens einer zwischen der oberen und der unteren Lage (10 und 11) aufgenommenen, Licht transportierenden Lage (12), durch welche Lichtstrahlen (L) in Richtung der oberen Lage (10) transportierbar sind, wobei die Lagen (10, 11, 12, 14) miteinander verbunden sind und die untere Lage (11) zumindest quer zur Bewegungsrichtung (R) unflexibel ausgebildet ist, **dadurch gekennzeichnet, dass** die untere Lage (11) aus einer rippenartigen Struktur besteht, welche durch eine Vielzahl von quer zur Bewegungsrichtung (R) verlaufenden, länglichen Elementen (11-1) gebildet ist, wobei die rippenartige Struktur mit einer flexiblen Lage (11-2) verbunden ist und wobei jedes Element (11-1) aus einem Basisteil (110) mit einem im Querschnitt rechteckförmigen Umriss und einem daran angeformten, nach unten abstehenden, rippenartigen Teil (111) besteht.

2. Abdeckvorrichtung (1, 1', 1", 1‴) nach dem vorhergehenden Anspruch, **dadurch gekennzeichnet, dass** zwischen der oberen Lage (10) und der unteren Lage (11) zusätzlich wenigstens eine sensorische Lage (14) angeordnet ist, welche mindestens einen Sensor enthält.

3. Abdeckvorrichtung (1", 1‴) nach einem der vorhergehenden Ansprüche, **dadurch gekennzeichnet, dass** die Licht transportierende Lage (12) zumindest bereichsweise lichtleitend und/oder lichtreflektierend ausgebildet ist, derart, dass seitlich in die Licht transportierende Lage (12) eingekoppelte Lichtstrahlen (L) von der Lage (12) in Richtung der oberen Lage (10) auskoppelbar sind.

4. Abdeckvorrichtung (1) nach einem der vorhergehenden Ansprüche, **dadurch gekennzeichnet, dass** durch die Licht transportierende Lage (12) selbst wenigstens ein Leuchtmittel (120) aufgenommen ist, welches Lichtstrahlen (L) in Richtung der oberen Lage (10) abstrahlt.

5. Abdeckvorrichtung (1, 1", 1‴) nach einem der vorhergehenden Ansprüche, **dadurch gekennzeichnet, dass** die obere Lage (10), die untere Lage (11) und die zwischen diesen angeordneten Lagen (12, 14) zumindest in der Bewegungsrichtung (R) flexibel ausgebildet sind.

6. Abdeckvorrichtung (1, 1", 1‴) nach einem der vorhergehenden Ansprüche, **dadurch gekennzeichnet, dass** die untere Lage (11) aus zwei Komponenten besteht.

7. Abdeckvorrichtung (1‴) nach einem der vorhergehenden Ansprüche, **dadurch gekennzeichnet, dass** zwischen der oberen Lage (10) und der unteren Lage (11) wenigstens eine weitere Licht transportierende Lage (12') angeordnet ist.

8. Ablagebereich (2, 2', 2") für ein Kraftfahrzeug (K), welcher durch ein formstabiles Formteil (3, 3', 3") gebildet ist, **gekennzeichnet durch** eine Abdeckvorrichtung (1, 1', 1", 1‴) nach einem der Ansprüche 1 bis 7.

9. Kraftfahrzeug (K), **gekennzeichnet durch** wenigstens eine Abdeckvorrichtung (1, 1', 1", 1‴) nach einem der Ansprüche 1 bis 7.

## Claims

1. A covering device (1, 1', 1", 1‴) for covering a region (B) in the interior of a motor vehicle (K), wherein the covering device (1, 1', 1", 1‴), when in a mounted position, can be moved in a movement direction (R) into a covering position, in which the region (B) is covered, and into an uncovering position, in which the region (B) is uncovered, wherein at least a portion of the covering device (1, 1', 1", 1‴) can be illuminated, wherein the covering device (1, 1', 1", 1‴) consists, at least in some regions, of a plurality of layers (10, 11, 12, 14), with at least one upper layer (10), which, in the mounted state, faces a user and which is light-transmissive at least in some regions, at least one supporting lower layer (11), and at least one light-transporting layer (12), which is accommodated between the upper and lower layers (10 and 11) and by means of which light beams (L) can be transported toward the upper layer (10), wherein the layers (10, 11, 12, 14) are connected to one another and the lower layer (11) is inflexible at least transversely to the movement direction (R), **characterized in that** the lower layer (11) consists of a rib-like structure formed by a plurality of elongate elements (11-1) extending transversely to the movement direction (R), wherein the rib-like structure is connected to a flexible layer (11-2), and wherein each element (11-1) consists of a base part (110) with a contour rectangular in cross-section and a downwardly protruding rib-like part (111) integrally formed thereon.

2. The covering device (1, 1', 1", 1‴) according to the preceding claim, **characterized in that** at least one sensing layer (14), which contains at least one sensor, is additionally disposed between the upper layer (10) and the lower layer (11).

3. The covering device (1", 1‴) according to any one of the preceding claims, **characterized in that** the light-transporting layer (12) is light-conducting and/or light-reflecting at least in some regions, such that light beams (L) coupled laterally into the light-transporting layer (12) can be coupled out of the layer (12) toward the upper layer (10).

4. The covering device (1) according to any one of the preceding claims, **characterized in that** at least one illuminant (120), which radiates light beams (L) toward the upper layer (10), is accommodated by the light-transporting layer (12) itself.

5. The covering device (1, 1", 1‴) according to any one of the preceding claims, **characterized in that** the upper layer (10), the lower layer (11) and the layers (12, 14) disposed therebetween are flexible at least in the movement direction (R).

6. The covering device (1, 1", 1‴) according to any one of the preceding claims, **characterized in that** the lower layer (11) consists of two components.

7. The covering device (1‴) according to any one of the preceding claims, **characterized in that** at least one additional light-transporting layer (12') is disposed between the upper layer (10) and the lower layer (11).

8. A storage region (2, 2', 2") for a motor vehicle (K), which storage region (2, 2', 2") is formed by a dimensionally stable shaped part (3, 3', 3"), **characterized by** a covering device (1, 1', 1", 1‴) according to any one of claims 1 to 7.

9. A motor vehicle (K), **characterized by** at least one covering device (1, 1', 1", 1‴) according to any one of claims 1 to 7.

## Revendications

1. Dispositif de recouvrement (1, 1', 1", 1‴) destiné à recouvrir une zone (B) dans l'habitacle d'un véhicule automobile (K), dans lequel le dispositif de recouvrement (1, 1', 1", 1‴), en position de montage, est mobile dans une direction de déplacement (R) dans une position de recouvrement recouvrant la zone (B) et dans une position de libération libérant la zone (B) et dans lequel au moins une partie du dispositif de recouvrement (1, 1', 1", 1‴) peut être éclairée, dans lequel le dispositif de recouvrement (1, 1', 1", 1‴) est constitué au moins par zones de plusieurs couches (10, 11, 12, 14), avec au moins une couche supérieure (10) tournée vers un utilisateur dans l'état de montage, laissant passer la lumière au moins par zones, au moins une couche inférieure (11) de support et au moins une couche de transport de lumière (12) reçue entre la couche supérieure et la couche inférieure (10 et 11), à travers laquelle des rayons lumineux (L) peuvent être transportés en direction de la couche supérieure (10), dans lequel les couches (10, 11, 12, 14) sont reliées les unes aux autres et la couche inférieure (11) est conçue rigide au moins transversalement à la direction de déplacement (R), **caractérisé en ce que** la couche inférieure (11) est constituée d'une structure de type nervure, qui est formée par une pluralité d'éléments longitudinaux (11-1) s'étendant transversalement à la direction de déplacement (R), dans lequel la structure de type nervure est reliée à une couche flexible (11-2) et dans lequel chaque élément (11-1) est constitué d'une partie de base (110) avec un contour rectangulaire en section transversale et une partie de type nervure (111) formée sur celle-ci, saillante vers le bas.

2. Dispositif de recouvrement (1, 1', 1", 1‴) selon la revendication précédente, **caractérisé en ce que**, entre la couche supérieure (10) et la couche inférieure (11) est agencée en outre au moins une couche sensorielle (14), qui contient au moins un capteur.

3. Dispositif de recouvrement (1", 1‴) selon l'une quelconque des revendications précédentes, **caractérisé en ce que** la couche de transport de lumière (12) est conçue au moins par zones conduisant la lumière et/ou réfléchissant la lumière, de sorte que les rayons lumineux (L) couplés latéralement dans la couche de transport de lumière (12) puissent être découplés de la couche (12) en direction de la couche supérieure (10).

4. Dispositif de recouvrement (1) selon l'une quelconque des revendications précédentes, **caractérisé en ce que** seule au moins une ampoule (120) est reçue à travers la couche de transport de lumière (12), qui émet des rayons lumineux (L) en direction de la couche supérieure (10).

5. Dispositif de recouvrement (1, 1", 1‴) selon l'une quelconque des revendications précédentes, **caractérisé en ce que** la couche supérieure (10), la couche inférieure (11) et les couches (12, 14) agencées entre celles-ci sont conçues flexibles au moins dans la direction de déplacement (R).

6. Dispositif de recouvrement (1, 1", 1‴) selon l'une quelconque des revendications précédentes, **caractérisé en ce que** la couche inférieure (11) est constituée de deux composants.

7. Dispositif de recouvrement (1‴) selon l'une quelconque des revendications précédentes, **caractérisé en ce que**, entre la couche supérieure (10) et la couche inférieure (11), au moins une autre couche de transport de lumière (12') est agencée.

8. Zone de rangement (2, 2', 2") pour un véhicule automobile (K), qui est formée par une moulure de forme stable (3, 3', 3"), **caractérisée par** un dispositif de recouvrement (1, 1', 1", 1‴) selon l'une quelconque des revendications 1 à 7.

9. Véhicule automobile (K), **caractérisé par** au moins un dispositif de recouvrement (1, 1', 1", 1‴) selon l'une quelconque des revendications 1 à 7.
